# EUROPEAN PATENT APPLICATION

(11) **EP 3 188 358 A1**
(43) Date of publication of application: **05.07.2017**
(21) Application number: 16205874.7
(22) Date of filing: 21.12.2016
(51) Int. Cl.: H02P 6/18, H02P 25/08

(54) **CONTROL DEVICE FOR SWITCHED RELUCTANCE MOTOR**

(30) Priority: 24.12.2015 JP 2015251646; 29.06.2016 JP 2016129329
(71) Applicant: Toyota Jidosha Kabushiki Kaisha, Aichi-ken Aichi 471-8571 (JP); Tokyo University of Science Foundation, Tokyo 162-8601 (JP)
(72) Inventor: DEGUCHI, Jun-ichi, Toyota-shi Aichi-Ken, Aichi 471-8571 (JP); ARAKAWA, Kazuya, Toyota-shi Aichi-Ken, Aichi 471-8571 (JP); YOSHIZUE, Kensuke, Toyota-shi Aichi-Ken, Aichi 471-8571 (JP); HOSHI, Nobukazu, Tokyo 162-8601 (JP); SHIBUYA, Keiichi, Tokyo 162-8601 (JP); KOBAYASHI, Yusuke, Tokyo 162-8601 (JP)
(74) Representative: D Young & Co LLP

(57) **Abstract**

A control device (100) for a switched reluctance motor (1) includes: a switching controller (100) configured to execute switching control to switch motor drive control between a first control mode for reducing torque fluctuations and a second control mode for suppressing radial force fluctuations based on the rotational speed of the motor; a first controller (100) configured to execute torque-fluctuation reducing control; and a second controller (100) configured to execute radial-force-fluctuation reducing control. The torque-fluctuation reducing control includes control to set an excitation zone in which an excitation current is caused to flow through coils (12) to a rotation angle range wider than that of the excitation zone of the second control mode.

## Description

### BACKGROUND OF THE INVENTION

### 1. Field of the Invention

The present invention relates to a control device for a switched reluctance motor.

### 2. Description of the Related Art

Japanese Laid-open Patent Publication No. 2013-240200 discloses a control device that changes an excitation start angle and an excitation end angle of control modes at a low load time, a medium load time, and a high load time to improve the operation efficiency and the energy density of a switched reluctance motor.

Japanese Laid-open Patent Publication No. 8-205581 discloses a control device that executes control to shift turning on/off of an excitation current for a coil of one phase in a three-phase coil by a predetermined rotation angle or time with respect to turning on/off of an excitation current for a coil of another phase to reduce noise and vibration caused by a magnetic attractive force.

A plurality of problems are known in the switched reluctance motor. Specifically, there are three problems of efficiency, noise and vibration (NV), and torque fluctuation (torque ripple).

However, the configuration described in Japanese Laid-open Patent Publication No. 2013-240200 does not take into account the noise and vibration and the torque fluctuation. In Japanese Laid-open Patent Publication No. 2013-240200, the gradient of changes in the excitation current becomes steep in an excitation zone and accordingly changes in the vibratory force become large, which may lead to degradation of the noise and vibration and the torque fluctuation.

If only one of the problems described above is prioritized in the switched reluctance motor, a trade-off situation, for example, where the vibration and noise are deteriorated while the efficiency can be improved or where the efficiency is reduced while the vibration and noise can be improved occurs. Therefore, only a combination of the configuration described in Japanese Laid-open Patent Publication No. 2013-240200 with the configuration described in Japanese Laid-open Patent Publication No. 8-205581 cannot provide a desired result for the three problems of the efficiency, the vibration and noise, and the torque fluctuation.

The present invention has been achieved in view of the above circumstances, and an object of the present invention is to provide a control device for a switched reluctance motor that can reduce the vibration and noise and the torque fluctuation while suppressing a reduction in the efficiency considering a balance among three elements of the efficiency, the noise and vibration, and the torque fluctuation.

### SUMMARY OF THE INVENTION

According to one aspect of the present invention, there is provided a control device for a switched reluctance motor that is driven by a flow of an excitation current through coils. The control device includes: a switching controller configured to execute switching control to switch drive control of the switched reluctance motor between a first control mode for reducing torque fluctuations and a second control mode for reducing fluctuations of a radial force as a radial component of a magnetic attractive force based on rotational speed and a torque of the switched reluctance motor; a first controller configured to execute first control to cause an excitation current with a current waveform for reducing the torque fluctuations to flow through the coils as control in the first control mode; and a second controller configured to execute second control to cause an excitation current with a current waveform for reducing the radial force fluctuations to flow through the coils as control in the second control mode. The switching controller is configured to: select the first control mode when the rotational speed of the switched reluctance motor is smaller than a predetermined rotational speed in a state where the torque has a predetermined value; and select the second control mode when the rotational speed of the switched reluctance motor is equal to or larger than the predetermined rotational speed in a state where the torque has the predetermined value. The first control mode includes control to set an excitation zone in which the excitation current is caused to flow through the coils to a rotation angle range wider than that of the excitation zone of the second control mode.

According to the present invention, the drive control is switched between the first control mode for reducing the torque fluctuations and the second control mode for reducing the radial force fluctuations according to the rotational speed of the switched reluctance motor. At the time of driving of the switched reluctance motor, on a side where the rotational speed of the switched reluctance motor is small, the radial force fluctuations caused by the magnetic attractive force are smaller than those on a side where the rotational speed of the switched reluctance motor is large while larger torque fluctuations than those on the side where the rotational speed of the switched reluctance motor is large occur. Accordingly, the control device of the present invention prioritizes a reduction in the torque fluctuations over a reduction in the vibration and noise and performs the first control mode when the rotational speed of the switched reluctance motor is smaller than the predetermined rotational speed. On the other hand, in terms of the efficiency, the excitation zone in the first control mode is set to the rotation angle range wider than that of the excitation zone in the second control mode and thus adversely includes a rotation angle range in which the efficiency is relatively low. However, because the excitation zone is narrower in the second control mode than in the first control mode, the excitation zone can be set to be close to an efficiency-oriented excitation zone. That is, when the current waveform of the first control mode and the current waveform of the second control mode are compared in the efficiency, the second control mode is more efficient than the first control mode. Accordingly, the second control mode can realize an operation state more efficient than the first control mode and can reduce the radial force fluctuations while suppressing a reduction in the efficiency. At the time of driving of the switched reluctance motor, the torque fluctuations are smaller on the side where the rotational speed of the switched reluctance motor is large than on the side where the rotational speed of the switched reluctance motor is small. Therefore, when the rotational speed of the switched reluctance motor is equal to or larger than the predetermined rotational speed, the control device of the present invention prioritizes a reduction in the vibration and noise over a reduction in the torque fluctuations and performs the second control mode. Therefore, according to the control device of the present invention, by using the first control mode or the second control mode according to the rotational speed of the switched reluctance motor, appropriate control corresponding to the rotational speed can be executed and the vibration and noise and the torque fluctuations can be reduced while a reduction in the efficiency is suppressed.

In the above-described invention, it is preferable that the predetermined rotational speed increases as the torque increases.

According to the present invention, the operation state of the switched reluctance motor can be detected more accurately and thus the drive control can be switched between the first control mode and the second control mode. Therefore, according to the operation state of the switched reluctance motor, the noise and vibration and the torque fluctuations can be reduced while a reduction in the efficiency is suppressed.

In the above-described invention, it is preferable that the predetermined rotational speed includes: a first rotational speed for switching from the second control mode to the first control mode; and a second rotational speed for switching from the first control mode to the second control mode, the second rotational speed being larger than the first rotational speed in a state where the torque has the predetermined value and that the switching controller is configured to: execute switching control from the second control mode to the first control mode when the rotational speed of the switched reluctance motor decreases from a larger rotational speed than the second rotational speed to be smaller than the first rotational speed in a state where the torque has the predetermined value; and execute switching control from the first control mode to the second control mode when the rotational speed of the switched reluctance motor increases from a smaller rotational speed than the first rotational speed to be equal to or larger than the second rotational speed in a state where the torque has the predetermined value.

According to the present invention, the predetermined rotational speed includes the first rotational speed for switching to the first control mode and the second rotational speed for switching to the second control mode and has a hysteresis width. Therefore, a feeling of being busy that switching between the first control mode and the second control mode is frequently performed can be suppressed. Furthermore, changes in the efficiency, the vibration and noise, and the torque fluctuations due to frequent execution of the switching control can be suppressed.

In the above-described invention, it is preferable that the predetermined rotational speed includes: a first rotational speed for switching from the second control mode to the first control mode, and a second rotational speed for switching from the first control mode to the second control mode, the second rotational speed being smaller than the first rotational speed in a state where the torque has the predetermined value and that the switching controller is configured to: execute control to gradually switch from the second control mode to the first control mode during a period from when the rotational speed of the switched reluctance motor falls below the first rotational speed till when the rotational speed of the switched reluctance motor reaches the second rotational speed in a state where the torque has the predetermined value; and execute control to gradually switch from the first control mode to the second control mode during a period from when the rotational speed of the switched reluctance motor exceeds the second rotational speed till which the rotational speed of the switched reluctance motor reaches the first rotational speed in a state where the torque has the predetermined value.

According to the present invention, the predetermined rotational speed includes the first rotational speed for switching to the first control mode and the second rotational speed for switching to the second control mode and has a hysteresis width. Therefore, a feeling of being busy due to frequent switching between the first control mode and the second control mode can be suppressed. Furthermore, changes in the efficiency, the vibration and noise, and the torque fluctuations due to frequent execution of switching control can be suppressed. Because switching between the first control mode and the second control mode is performed gradually, abrupt changes of the efficiency, the vibration and noise, and the torque fluctuations at the time of execution of switching control can be suppressed.

In the above-described invention, it is preferable that the current waveform for reducing the torque fluctuations has the excitation zone wider than that of the current waveform for reducing the radial force fluctuations and a maximum current value smaller than that of the current waveform for reducing the radial force fluctuations.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram illustrating a system configuration example of an embodiment;
FIG. 2 is an N-T line diagram of a switched reluctance motor;
FIG. 3 is a flowchart illustrating an example of switching control;
FIG. 4 is a diagram illustrating voltage waveforms and current waveforms;
FIG. 5 is a diagram illustrating torque fluctuations;
FIG. 6 is a flowchart illustrating an example of torque-fluctuation reducing control;
FIG. 7 is a diagram illustrating a voltage waveform and a current waveform of a second control mode;
FIG. 8 is a diagram illustrating radial force fluctuations in the second control mode;
FIG. 9 is a diagram illustrating a switching map in a first modification;
FIG. 10 is an explanatory diagram of a switching operation in the first modification;
FIG. 11 is an explanatory diagram of a switching map and a switching operation in a second modification;
FIG. 12 is an explanatory diagram of a switching operation in a switching zone in the second modification;
FIG. 13 is a diagram illustrating voltage waveforms and current waveforms;
FIG. 14 is a flowchart illustrating switching control in a modification; and
FIG. 15 is a skeleton diagram illustrating an example of an applicable vehicle.

### DETAILED DESCRIPTION OF THE PREFERRED EMBODIMENTS

A switched reluctance motor according to an embodiment of the present invention will be explained below in detail with reference to the accompanying drawings.

### 1. System configuration

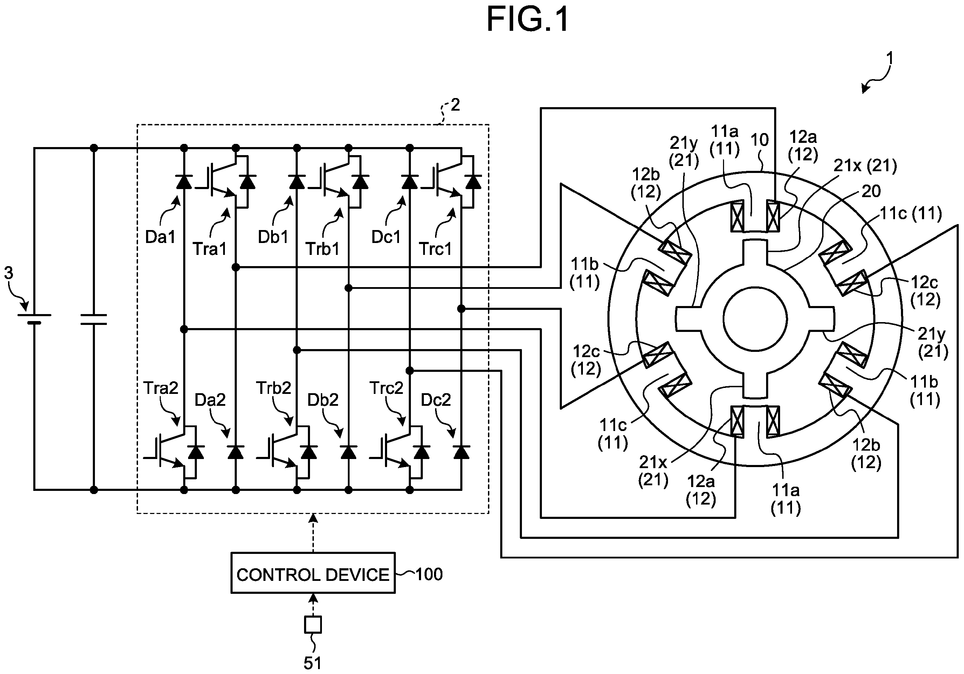

FIG. 1 is a schematic diagram illustrating a system configuration example including a control device for a switched reluctance motor according to an embodiment of the present invention. The system configuration according to the present embodiment includes a switched reluctance motor (SRM) 1, an inverter 2, a battery 3, and a control device 100.

The switched reluctance motor (hereinafter, "SR motor") 1 is an electric motor that does not use a permanent magnet in a rotor and includes a salient pole stator 10 and a salient pole rotor 20. The SR motor 1 illustrated in FIG. 1 is a three-phase SR motor having the stator 10 with six poles and the rotor 20 with four poles.

The stator 10 includes a plurality of stator teeth 11 as salient poles on an inner circumferential part of an annular structure. Coils 12 connected to the inverter 2 are wound on the stator teeth 11, respectively. In the stator 10, a pair of stator teeth 11a and 11a placed at radially facing positions constitutes one phase. The rotor 20 is placed on a radially inner side of the stator 10. The rotor 20 includes a plurality of rotor teeth 21 as salient poles on an outer circumferential part of an annular structure. The rotor 20 rotates together with a rotor shaft (not illustrated).

The SR motor 1 is a three-phase synchronous motor and thus includes an A phase constituted of the pair of the stator teeth 11a and 11a and a coil 12a, a B phase constituted of a pair of stator teeth 11b and 11b and a coil 12b, a C phase constituted of a pair of stator teeth 11c and 11c and a coil 12c. The rotor 20 includes a pair of rotor teeth 21x and 21x and a pair of rotor teeth 21y and 21y.

The SR motor 1 is electrically connected to the battery 3 via the inverter 2. The coils 12 in the SR motor 1 are electrically connected to the inverter 2. The SR motor 1 functions as an electric motor and an electric generator. A boost converter that boosts a voltage to be applied to the SR motor 1 may be provided between the inverter 2 and the battery 3.

The inverter 2 includes an electrical circuit (inverter circuit) having six switching elements to enable the coils 12 to be energized. The inverter 2 causes a current to flow through the respective coils 12 connected to the inverter circuit with respect to each phase. The inverter circuit illustrated in FIG. 1 has transistors as the switching elements and each phase includes two transistors and two diodes. The inverter 2 turns on or off two transistors in each phase at the same time to change a current value flowing through the corresponding coil 12. Transistors Tra1 and Tra2 and diodes Da1 and Da2 are included in the A phase. Transistors Trb1 and Trb2 and diodes Db1 and Db2 are included in the B phase. Transistors Trc1 and Trc2 and diodes Dc1 and Dc2 are included in the C phase.

The control device 100 is an electronic control unit (ECU) that controls the SR motor 1. The control device 100 has a CPU (Central Processing Unit) and a storage unit that has data such as various programs stored therein, and the CPU includes a control unit that performs various calculations to control the SR motor 1. As a result of a calculation in the control unit, an instruction signal for controlling the SR motor 1 is output from the control device 100 to the inverter 2. The control device 100 controls the inverter 2 to control a voltage and an excitation current to be applied to the SR motor 1.

A resolver signal is input to the control device 100 from a rotor position sensor 51 that detects the rotational speed of the SR motor 1. The control device 100 executes drive control of repeatedly switching the coils 12 to be energized with respect to each phase according to the resolver signal from the rotor position sensor 51 based on a relative positional relation between the stator teeth 11 and the rotor teeth 21 in a rotation direction. The control device 100 rotates the rotor 20 by executing the drive control. At the time of the drive control, the control device 100 causes an excitation current to flow through one of the coils 12 in a certain phase to excite the corresponding stator teeth 11 and generate a magnetic attractive force between the stator teeth 11 and the rotor teeth 21 near the stator teeth 11. The magnetic attractive force can be decomposed into force components in a circumferential direction and a radial direction. The force component in the circumferential direction is a rotational force and the force component in the radial direction is a radial force. The rotational force being the component in the circumferential direction of the magnetic attractive force acts on the rotor 20, which generates a torque of the SR motor 1. The radial force being the component in the radial direction of the magnetic attractive force becomes a cause of noise and vibration (NV). A sound pressure generated in the SR motor 1 being driven increases as the radial force increases. When the radial force acting on the SR motor 1 increases, the stator 10 or the rotor 20 greatly displaces, resulting in large vibration.

In a case where a stator tooth 11 and a rotor tooth 21 are at positions completely aligned in the circumferential direction (a case where the stator tooth 11 and the rotor tooth 21 are at positions completely facing each other in the radial direction), the magnetic attractive force acts only in the radial direction. No rotational force acts on the rotor tooth 21 and only the radial force acts thereon. Accordingly, when the stator tooth 11 being excited by a flow of a current through the corresponding coil 12 are positioned to face the rotor tooth 21 in the radial direction to be completely aligned with each other, or before or after the complete alignment, the control device 100 targets the corresponding coil 12 for non-excitation by stopping the energization. When the next rotor tooth 21 approaches a predetermined position, the control device 100 targets the rotor tooth 21 for excitation.

### 2. Switching map

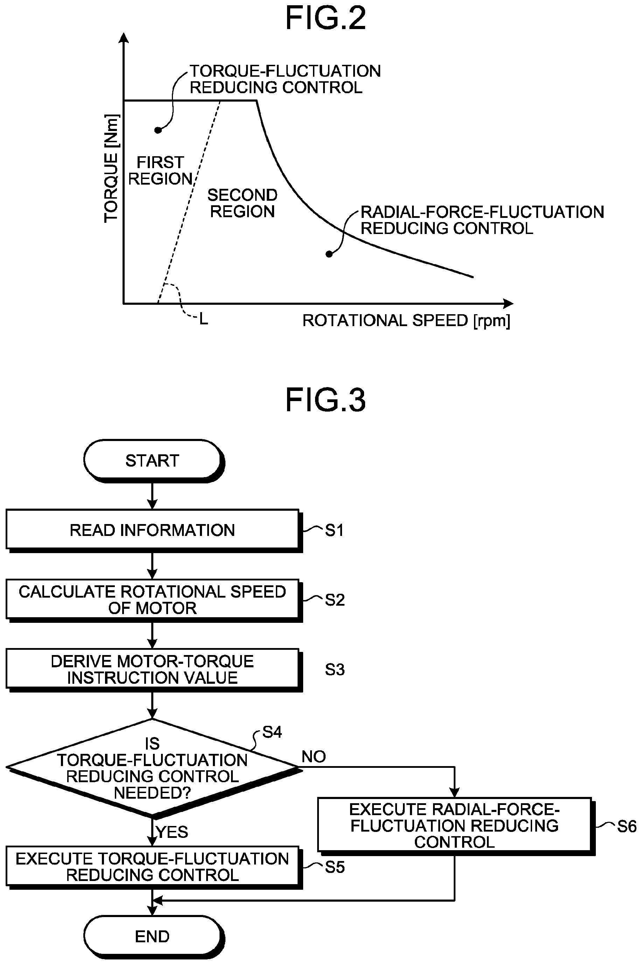

FIG. 2 is an N-T line diagram illustrating characteristics of the SR motor 1. The N-T line diagram of FIG. 2 is a map representing the rotational speed of the SR motor 1 on the horizontal axis and the torque of the SR motor 1 on the vertical axis. The SR motor 1 is driven within an operating range of the map illustrated in FIG. 2. According to the map, the maximum torque of the SR motor 1 is a rated torque on the side of low rotational speed and decreases as the rotational speed of the SR motor 1 increases.

The control device 100 executes switching control to switch the drive control on the SR motor 1 between a first control mode and a second control mode using the map illustrated in FIG. 2. That is, at the time of switching control, the control device 100 uses the rotational speed of the SR motor 1 and a required torque (intended motor torque) of the SR motor 1 as parameters.

The first control mode is a control mode for reducing torque fluctuations. The control device 100 executes first control (torque-fluctuation reducing control) to flow an excitation current with a current waveform that enables a reduction of the torque fluctuations as control in the first control mode. The current waveform that enables a reduction of the torque fluctuations is a waveform having a two-phase excitation zone in which excitation zones of different phases overlap with each other.

The second control mode is a control mode for reducing the radial force as the component in the radial direction of the magnetic attractive force. The control device 100 executes second control (radial-force-fluctuation reducing control) to flow an excitation current with a current waveform that enables a reduction of the radial force as control in the second control mode. The current waveform that enables a reduction of the radial force is a waveform having the excitation current increasing to a maximum current value in a region (in a rotation angle range) in which the radial force is relatively small in an excitation zone.

As illustrated in FIG. 2, the operating range in the switching map is divided into a first region and a second region bounded by a switching line L. The first region is an operating region in which a reduction of the torque fluctuations is to be prioritized and is a region in which the first control mode of executing the torque-fluctuation reducing control is selected. The second region is an operating region in which a reduction of vibration and noise can be prioritized over a reduction of the torque fluctuations and is a region in which the second control mode of executing the radial-force-fluctuation reducing control is selected. The switching line L is set to cause the rotational speed to increase as the torque increases in a range of a predetermined rotational speed. The predetermined rotational speed is set to a low rotational speed region in which large torque fluctuations occur at the time of driving of the SR motor 1. As illustrated in FIG. 2, the predetermined rotational speed as a reference value for switching the control mode is set to a range (low rotational speed region) of the rotational speed in which the torque that can be output from the SR motor 1 is the rated torque. The low rotational speed region does not include 0 as the rotational speed. The first region is set to an operating region on the side of lower rotational speed than the second region. That is, it can also be said that the switching line L as the boundary between the first region and the second region is set to the predetermined rotational speed. The control device 100 includes a determination unit that determines which of the first region and the second region an operating state of the SR motor 1 is included in.

### 3. Switching control

FIG. 3 is a flowchart illustrating an example of the switching control. The control device 100 reads various types of information to be used for the drive control on the SR motor 1 (Step S1). The information includes the resolver signal input from the rotor position sensor 51 and the required torque for the SR motor 1. Subsequently, the control device 100 calculates the rotational speed of the SR motor 1 based on the resolver signal (Step S2). The control device 100 also derives a motor-torque instruction value according to the required torque (Step S3).

The control device 100 determines whether the first control (torque-fluctuation reducing control) of reducing the torque fluctuations needs to be executed as the motor drive control (Step S4). At Step S4, whether to set the motor drive control to the first control mode is determined.

Specifically, the control device 100 can execute the determination processing at Step S4 using an actual rotational speed of the SR motor 1 obtained from the rotor position sensor 51, the motor-torque instruction value according to the required torque, and the switching map illustrated in FIG. 2. In this case, the control device 100 determines whether an operating point defined by the rotational speed of the SR motor 1 and the motor-torque instruction value is within the first region of the switching map. When the operating point of the SR motor 1 moves from the second region into the first region across the switching line L, the control device 100 performs a positive determination at Step S4 to set the motor drive control to the first control mode. In this processing, the required torque value may be used instead of the motor-torque instruction value. That is, the operating point may be calculated based on the rotational speed of the SR motor 1 and the required torque value of the SR motor 1.

Alternatively, the control device 100 can perform the determination processing at Step S4 using only the rotational speed of the SR motor 1 as the parameter. In this case, the control device 100 determines whether the rotational speed of the SR motor 1 is lower than the predetermined rotational speed. The predetermined rotational speed is a preset value. For example, the rotational speed of the SR motor 1 at which a maximum torque that can be output from the SR motor 1 becomes the rated torque in the operating region in the switching map illustrated in FIG. 2 can be set as the predetermined rotational speed of the SR motor 1. Because fluctuations of the radial force caused by the magnetic attractive force are smaller on a side where the rotational speed of the SR motor 1 is low than on a side where the rotational speed of the SR motor 1 is high, a reduction of the torque fluctuations can be prioritized. Accordingly, when the rotational speed of the SR motor 1 is lower than the predetermined rotational speed in a state (operating state) where the torque of the SR motor 1 has a predetermined value, the control device 100 determines that the torque-fluctuation reducing control needs to be executed at Step S4. On the other hand, when the rotational speed of the SR motor 1 in a state where the torque of the SR motor 1 has the predetermined value is equal to or higher than the predetermined rotational speed, the control device 100 determines that the radial-force-fluctuation reducing control needs to be executed. The torque of the SR motor 1 to be used in the determination processing can be the required torque or the motor-torque instruction value.

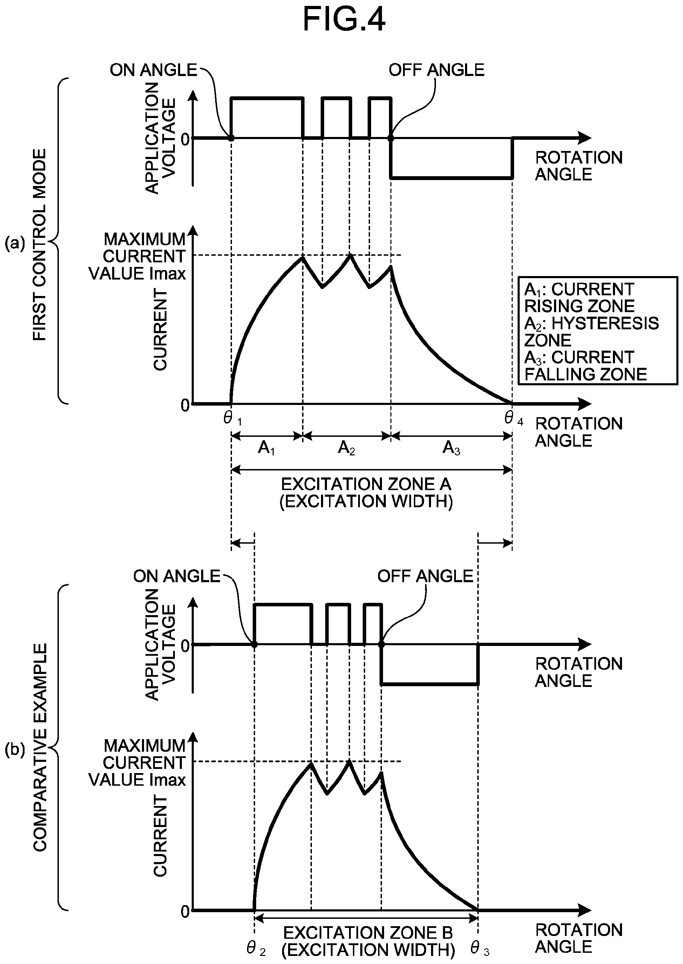

When a positive determination is performed at Step S4, the control device 100 sets the first control mode to execute the torque-fluctuation reducing control (first control) (Step S5). The torque-fluctuation reducing control (first control) is control of flowing an excitation current with a current waveform that enables a reduction of the torque fluctuations. A functional processing unit that performs the process at Step S5 is a first controller. The control unit of the control device 100 includes the first controller that performs the process at Step S5. Details of the first control mode (torque-fluctuation reducing control) are described later with reference to FIGS. 4 to 6.

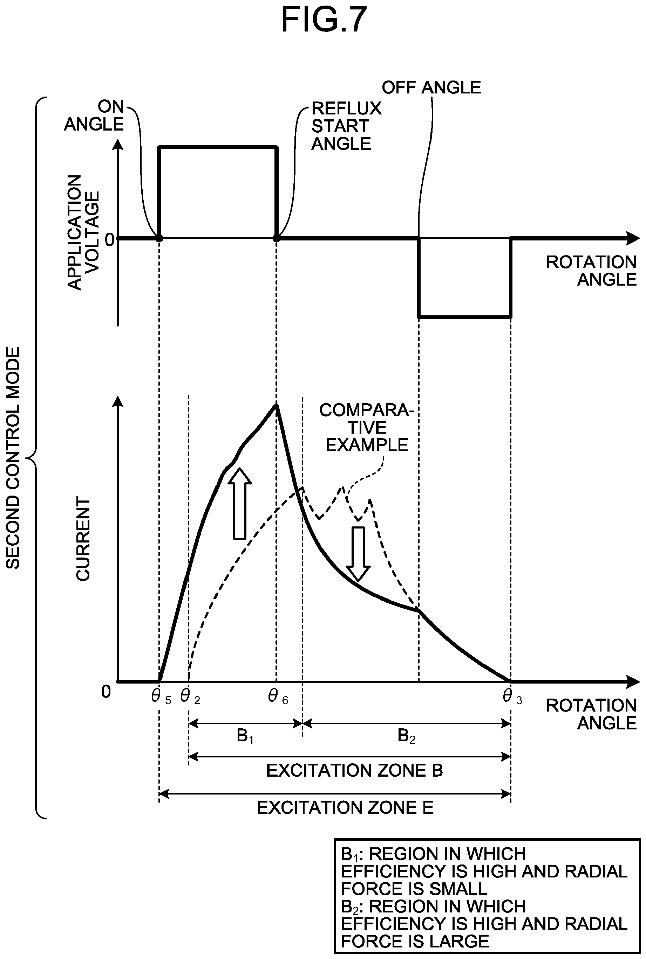

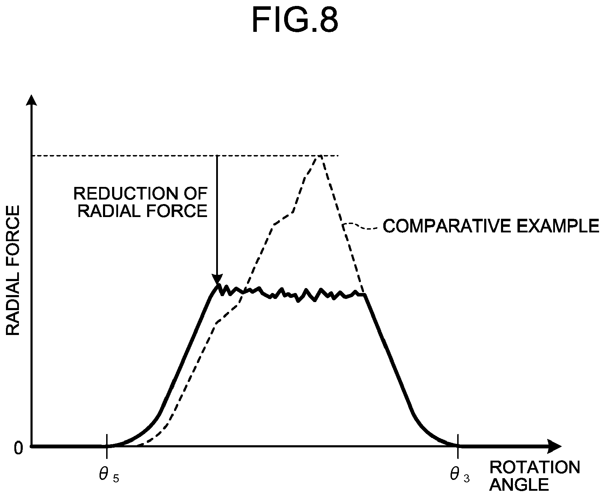

When a negative determination is performed at Step S4, the control device 100 sets the second control mode to execute the radial-force-fluctuation reducing control (second control) (Step S6). The radial-force-fluctuation reducing control (second control) is control of flowing an excitation current with a current waveform that enables a reduction of fluctuations of the radial force being a component in the radial direction of the magnetic attractive force. A functional processing unit that performs the process at Step S6 is a second controller. The control unit of the control device 100 includes the second controller that performs the process at Step S6. Details of the second control mode (radial-force-fluctuation reducing control) are described later with reference to FIGS. 7 and 8.

The process at Step S6 is performed when a negative determination is performed at Step S4 because the rotational speed of the SR motor 1 is relatively high. Because the radial force fluctuations caused by the magnetic attractive force are larger on the side where the rotational speed of the SR motor 1 is high than on the side where the rotational speed of the SR motor 1 is low, a reduction of the radial force is prioritized over a reduction of the torque fluctuations. That is, the torque fluctuations are given priority over the vibration and noise (NV).

### 4. Current waveform of first control mode

The current waveform of the first control mode is described with reference to (a) and (b) of FIG.4. (a) of FIG. 4 is a diagram illustrating a voltage waveform and a current waveform in the first control mode. (b) of FIG. 4 is a diagram illustrating a voltage waveform and a current waveform in a comparative example. The comparative example is a case where drive control of placing importance on the efficiency is executed.

As illustrated in (a) of FIG. 4, when the rotation angle of one of the rotor teeth 21 enters an excitation zone A, that is, when the rotation angle becomes an excitation start angle θ₁ (ON angle), the control device 100 starts flowing a current through a coil 12 to be excited. When the rotation angle of the rotor tooth 21 is in a current rising zone A₁, the control device 100 executes current rising control to the corresponding coil 12 of a stator tooth 11 to be excited. In the current rising zone A₁, control is executed to set a mode (positive voltage mode) of applying a positive voltage to increase the current to a maximum current value Imax. In a hysteresis zone A₂, control of repeating the positive voltage mode and a mode (free-wheeling mode) of setting the voltage at 0 (zero) is executed to control the current to have a magnitude near the maximum current value Imax. The free-wheeling mode is a control mode of refluxing the current in the inverter circuit via the coils 12 without any voltage applied to the coils 12. Specifically, the control device 100 executes control to cause the excitation current value in the hysteresis zone A₂ to transition within a range of a predetermined current width having the maximum current value Imax as an upper limit. In this case, the free-wheeling mode is performed when the excitation current value reaches the maximum current value Imax, and then the positive voltage mode is performed when the excitation current value reaches a lower limit of the predetermined current width. Alternatively, the control device 100 performs the positive voltage mode when an instantaneous current value I of the excitation current is smaller than a limited current value Iα and performs the free-wheeling mode when the instantaneous current value I is equal to or larger than the limited current value Iα. The limited current value Iα is set in advance at a value smaller than the maximum current value Imax. When the rotation angle of the rotor tooth 21 enters a current falling zone A₃ (becomes an OFF angle), the control device 100 starts causing the current that is being energized to the coil 12 of the excitation-target stator tooth 11 to fall. In the current falling zone A₃, the control device 100 executes control to perform a mode (negative voltage mode) of applying a negative voltage. The current flowing through the coil 12 becomes zero at an excitation end angle θ₄. In the first control mode, the excitation current continues to flow within a rotation angle range from the excitation start angle θ₁ to the excitation end angle θ₄. That is, the excitation zone A of the first control mode is a rotation angle range (excitation width) from the excitation start angle θ₁ to the excitation end angle θ₄. The excitation zone is a zone in which the excitation current is caused to flow through the coil 12.

When the first control mode and the efficiency-oriented comparative example are compared, an excitation zone B of the comparative example is a rotation angle range from an excitation start angle θ₂ to an excitation end angle θ₃ as illustrated in (b) of FIG. 4. The excitation start angle θ₂ of the comparative example is larger than the excitation start angle θ₁ of the first control mode. The excitation end angle θ₃ of the comparative example is smaller than the excitation end angle θ₄ of the first control mode. In sum, the rotation angle is larger in the order of the excitation start angle θ₁, the excitation start angle θ₂, the excitation end angle θ₃, and the excitation end angle θ₄. The excitation zone A in the first control mode is a wider rotation angle range than that of the excitation zone B in the comparative example. The excitation zone A in the first control mode is set to a wider rotation angle range than that of an excitation zone E in the second control mode, which will be described later. In the examples illustrated in (a) and (b) of FIG. 4, the ON angle is put forward and the excitation end angle is put backward in the first control mode as compared to the efficiency-oriented current waveform. In the first control mode, it suffices to perform at least one of putting forward of the ON angle and putting backward of the excitation end angle as compared to the efficiency-oriented current waveform. The efficiency of the SR motor 1 is based on a relation between the rotation angle (position relative to the stator tooth 11 as the excitation target) of the rotor tooth 21 and the inductance of the corresponding coil 12.

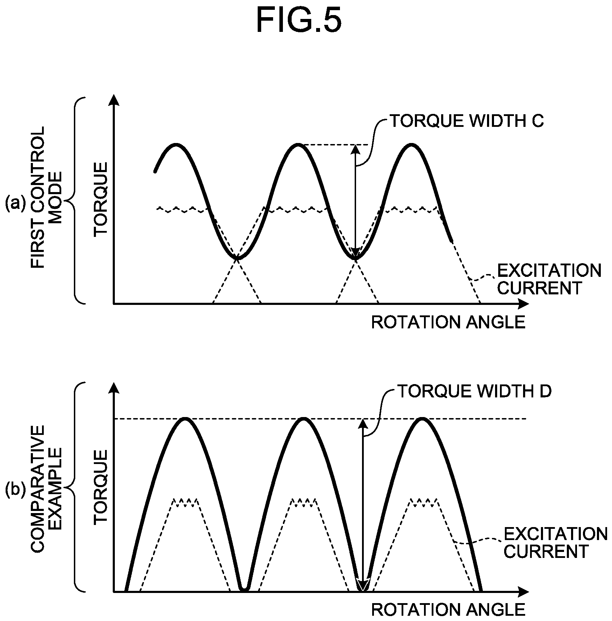

(a) of FIG. 5 is a diagram illustrating torque fluctuations in the first control mode. (b) of FIG. 5 is a diagram illustrating torque fluctuations in the comparative example. When the torque fluctuations are compared between the first control mode and the comparative example, a torque width C of the first control mode is smaller than a torque width D of the comparative example. The torque width represents the magnitude of the torque fluctuations. The first control mode realizes a current waveform that can reduce the torque fluctuations as compared to the efficiency-oriented current waveform. This is because the excitation zone A in the first control mode is a wider rotation angle range than that of the excitation zone B in the comparative example. Accordingly, before the excitation current of one of the coils 12 of a certain phase becomes zero, the excitation current of one of the coils 12 of another phase starts rising as illustrated in (a) of FIG. 5. That is, the excitation zones A in different phases overlap with each other due to an enlargement of the rotation angle range of the excitation zone A. On the other hand, in the efficiency-oriented current waveform, the excitation zone B is narrow and thus the excitation zones B in different phases do not overlap with each other as illustrated in (b) of FIG. 5. That is, the excitation current of a certain phase becomes zero and thereafter the excitation current of another phase rises in the comparative example, so that the gradient of the torque fluctuations becomes steep and the torque width D becomes large.

### 4-1. Torque-fluctuation reducing control

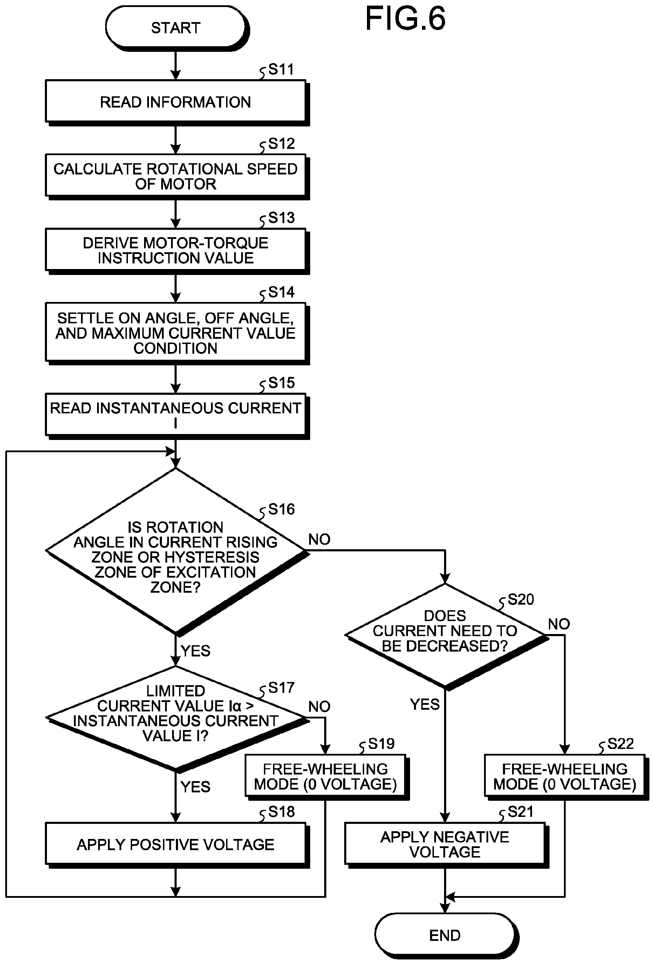

FIG. 6 is a flowchart illustrating an example of the torque-fluctuation reducing control. The control device 100 performs a control flow illustrated in FIG. 6 in the first control mode. Steps S11 to S13 illustrated in FIG. 6 are identical to Steps S1 to S3 illustrated in FIG. 3 described above. Therefore, descriptions of Steps S11 to S13 are omitted.

The control device 100 settles the ON angle, the OFF angle, and the maximum current value Imax as an excitation condition of the first control mode (Step S14). The control device 100 also reads the instantaneous current I actually flowing in one of the coils 12 of one phase based on a detection signal from a current sensor (not illustrated) (Step S15). The current sensor detects current values flowing in the coils 12, respectively, and is configured to be capable of detecting the instantaneous currents I in the coils 12 of respective phases.

The control device 100 determines whether the rotation angle is in the current rising zone A₁ or the hysteresis zone A₂ of the excitation zone A based on the rotation angle of the rotor 20 (Step S16).

When the rotation angle is in the current rising zone A₁ or the hysteresis zone A₂ and then a positive determination is performed at Step S16, the control device 100 determines whether the instantaneous current value I is smaller than the limited current value Iα (Step S17).

When the instantaneous current value I is smaller than the limited current value Iα and then a positive determination is performed at Step S17, the control device 100 performs the positive voltage mode to apply a positive voltage to the corresponding coil 12 (Step S18). For example, when the rotation angle is in the current rising zone A₁, the excitation current increasing toward the maximum current value Imax does not reach the maximum current value Imax and accordingly the control device 100 continues the positive voltage mode according to Step S18. When the rotation angle is in the hysteresis zone A₂, the excitation current value decreasing from the maximum current value Imax falls below the limited current value Iα and accordingly the control device 100 ends the free-wheeling mode to start the positive voltage mode according to Step S18. After performing the process at Step S18, the control device 100 returns to Step S16.

When the instantaneous current value I is equal to or larger than the limited current value Iα and then a negative determination is performed at Step S17, the control device 100 performs the free-wheeling mode to set the voltage to be applied to the corresponding coil 12 at zero (Step S19). For example, when the rotation angle is in the current rising zone A₁, the excitation current increasing toward the maximum current value Imax has reached the maximum current value Imax and accordingly the control device 100 ends the positive voltage mode to start the free-wheeling mode according to Step S19. This means that the zone is shifted from the current rising zone A₁ to the hysteresis zone A₂. When the rotation angle is in the hysteresis zone A₂, the excitation current value increasing toward the maximum current value Imax has exceeded the limited current value Iα and accordingly the control device 100 ends the positive voltage mode to start the free-wheeling mode. After performing the process at Step S19, the control device 100 returns to Step S16.

When the rotation angle is neither in the current rising zone A₁ nor in the hysteresis zone A₂ and thus a negative determination is performed at Step S16, the control device 100 determines whether the current needs to be decreased (Step S20). At Step S20, whether control of actively lowering the current needs to be performed when the rotation angle of the rotor tooth 21 is in the current falling zone A₃ is determined.

When the current needs to be decreased and thus a positive determination is performed at Step S20, the control device 100 performs the negative voltage mode to apply a negative voltage to the relevant coil 12 (Step S21). The control device 100 then ends this control routine.

When the current does not need to be decreased and thus a negative determination is performed at Step S20, the control device 100 performs the free-wheeling mode to set the application voltage to the coil 12 at zero (Step S22). The control device 100 then ends this control routine.

When a negative determination is performed at Step S16 described above, the control device 100 selects the free-wheeling mode or the negative voltage mode as control to cause the current flowing in the coil 12 to fall based on the rotational speed of the rotor 20 and the current instruction value for the coil 12 (or the detection value of the current sensor). The SR motor 1 is more efficient in the free-wheeling mode than in the negative voltage mode. Therefore, when it is determined that the free-wheeling mode enables the current to sufficiently fall, that is, the free-wheeling mode can realize a target current waveform at a current falling time, the control device 100 selects the free-wheeling mode in preference to the negative voltage mode. On the other hand, when it is determined that the free-wheeling mode cannot realize a target current waveform at a current falling time, that is, a target current instruction value at the current falling time, the control device 100 selects the negative voltage mode to cause the current to fall more rapidly than in the free-wheeling mode.

### 5. Current waveform of second control mode

The current waveform of the second control mode is described with reference to FIG. 7. FIG. 7 is a diagram illustrating a voltage waveform and a current waveform of the second control mode. In FIG. 7, a current waveform of a comparative example is indicated by a dashed line. The comparative example is a case where efficiency-oriented drive control is executed similarly in the example compared with the first control mode.

As illustrated in FIG. 7, the magnitudes of the maximum current values are different between the second control mode and the comparative example. In the second control mode, the excitation current with a current waveform having a larger maximum current value Imax than in the comparative example in which the efficiency is prioritized is caused to flow. That is, the second control (radial-force-fluctuation reducing control) includes control to set the maximum current value Imax at a larger value than in the comparative example. Furthermore, in the example illustrated in FIG. 7, the excitation zone E of the second control mode is set to a wider rotation angle range than that of the excitation zone B in the comparative example.

More specifically, the rotor tooth 21 moves from a current rising zone to a region B₁ in which the efficiency is high and the radial force is small while reducing a relative distance from a stator tooth 11 switched as an excitation target. In the second control mode, a flow of a current through the relevant coil 12 is started at a rotation angle θ₅ before the region B₁ in which the efficiency is high and the radial force is small. The rotation angle θ₅ is an excitation start angle in the second control mode and is set to a rotation angle before the excitation rotation angle θ₂ in the comparative example. That is, in the second control mode, control to put forward the excitation start angle as compared to that in the efficiency-oriented comparative example is executed.

While the maximum current value Imax is larger in the second control mode than in the comparative example, the excitation current increases to the maximum current value Imax in the current rising zone of the second control mode at a rotation angle before that in the comparative example. A rotation angle θ₆ at which the excitation current reaches the maximum current value Imax is a reflux start angle in the second control mode. The current rising zone in the second control mode is between the rotation angle θ₅ and the rotation angle θ₆. That is, the current rising zone in the second control mode ends at a rotation angle before a rotation angle at which the current rising zone (B₁) in the comparative example ends. Furthermore, in the second control mode, the application voltage is set to zero to start lowering the current value within the region B₁ in which the efficiency is high and the radial force is small, unlike the comparative example. That is, the reflux start angle (θ₆) of the second control mode is included in the region B₁ in which the efficiency is high and the radial force is small.

The rotor tooth 21 then moves into a region B₂ in which the efficiency is high and the radial force is large while reducing the relative distance. In the region B₂ in which the efficiency is high and the radial force is large in the second control mode, the current value is controlled to a lower value than that in the comparative example. In the example illustrated in FIG. 7, the control device 100 executes the free-wheeling mode to set the application voltage to zero during a part of the region B₁ in which the efficiency is high and the radial force is small and a part of the region B₂ in which the efficiency is high and the radial force is large, the part of the region B₁ being continuous to the part of the region B₂. Accordingly, the current waveform of the second control mode in the angle range first reaches the maximum current value Imax and then continues to lower. Naturally, the current value in the second control mode is smaller in the region B₂ in which the efficiency is high and the radial force is large than in the region B₁ in which the efficiency is high and the radial force is small. For example, it suffices to set the current value for the relevant coil 12 to cause the radial force to be equal to or lower than a target value. In the example illustrated in FIG. 7, an excitation end angle at which the current value in the second control mode becomes zero is the same as the excitation end angle θ₃ in the efficiency-oriented comparative example. The excitation zone E in the second control mode may be set to the same excitation width as that of the excitation zone B in the comparative example. For example, in the second control mode, control to put forward both the excitation start angle at which the current is started to rise and the excitation end angle at which the current becomes zero as compared to the comparative example is executed.

In sum, in the second control mode, the current value for the coil 12 of the stator tooth 11 as the excitation target is set to be higher than the current value in the comparative example in the current rising zone and a part of the region B₁ in which the efficiency is high and the radial force is small and is set to be lower than the current value in the comparative example in a part of the region B₁ in which the efficiency is high and the radial force is small and the region B₂ in which the efficiency is high and the radial force is large. Accordingly, in the SR motor 1 that executes the second control mode, the radial force can be reduced as compared to the comparative example.

FIG. 8 is a diagram illustrating radial force fluctuations in the second control mode. A dashed waveform illustrated in FIG. 8 represents the radial force in the comparative example. As illustrated in FIG. 8, the radial force in the second control mode has a peak value smaller than that in the comparative example. Such a reduction in the peak value of the radial force occurring at the time of the second control mode as compared to the efficiency-oriented comparative example can reduce the fluctuations of the radial force.

When the efficiency is compared between the current waveform of the first control mode described above and the current waveform of the second control mode, the second control mode is more efficient than the first control mode. In the first control mode, the excitation zone A wider than that of the efficiency-oriented current waveform is set and thus the excitation zone includes a rotation angle range in which the efficiency is relatively low. In the second control mode, the excitation zone E that is closer to the efficiency-oriented excitation zone B than that of the first control mode can be set. That is, the second control includes control to set the excitation zone E to a rotation angle range closer to that of the excitation zone B of the efficiency-oriented current waveform than the excitation zone A of the first control mode. Accordingly, in the second control mode, a more efficient operation state than in the first control mode can be realized and the radial force fluctuations can be reduced while a reduction in the efficiency is suppressed.

As described above, according to the control device 100 of the present embodiment, control to flow the excitation currents with different current waveforms is executed according to the rotational speed of the motor and the motor torque. Therefore, the noise and vibration and the torque fluctuations can be reduced while a reduction in the efficiency is suppressed.

### 6. First modification

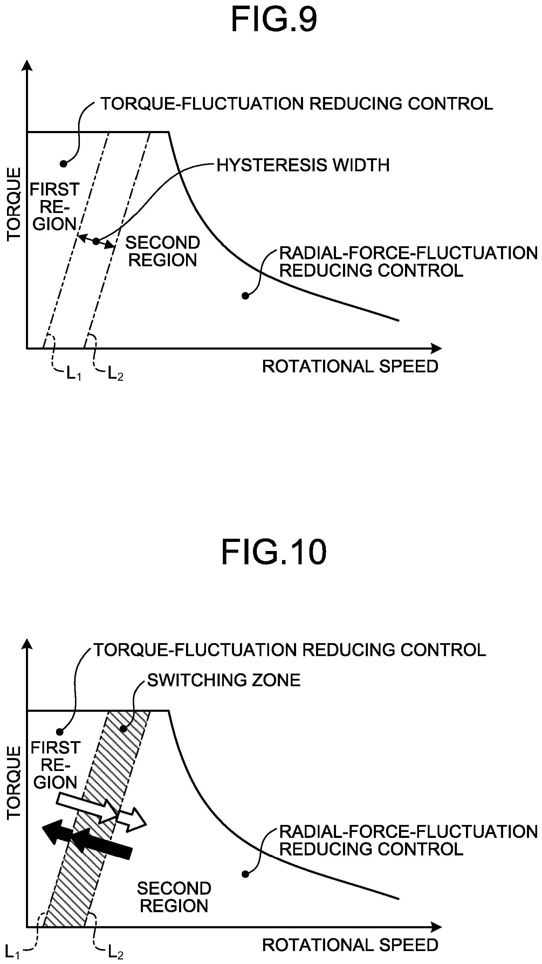

In a first modification, the switching map is different from that in the specific example described above. FIG. 9 is a diagram illustrating a switching map in the first modification. The control device 100 switches the motor drive control between the first control mode and the second control mode using the switching map illustrated in FIG. 9.

As illustrated in FIG. 9, in the switching map of the first modification, a switching zone having a predetermined hysteresis width is provided to prevent frequent switching between the first control mode and the second control mode. The switching zone is defined by a first switching line L₁ and a second switching line L₂. The first switching line L₁ is a switching line to be used when switching from the second control mode to the first control mode is performed. The second switching line L₂ is a switching line to be used when switching from the first control mode to the second control mode is performed. In the first modification, the first switching line L₁ is set to a lower rotation side than the second switching line L₂.

FIG. 10 is an explanatory diagram of a switching operation in the first modification. In FIG. 10, an operation at the time of switching from the second control mode to the first control mode is indicated by black arrows and an operation at the time of switching from the first control mode to the second control mode is indicated by white arrows.

In a case where the control device 100 selects the first control mode, an operating point defined by the rotational speed of the SR motor 1 and the required torque (motor-torque instruction value) shifts from an operation state in a second region into a first region across the first switching line L₁, so that the control device 100 performs switching from the second control mode to the first control mode as indicated by the black arrows in FIG. 10. That is, even when the operating point on the side of the second region moves across the second switching line L₂ due to a decrease in the rotational speed of the SR motor 1, switching of the control mode is not performed.

On the other hand, in a case where the control device 100 selects the second control mode, the operating point shifts from an operation state in the first region into the second region across the second switching line L₂, so that the control device 100 performs switching from the first control mode to the second control mode as indicated by the white arrows in FIG. 10. That is, even when the operating point on the side of the first region moves across the first switching line L₁ due to an increase in the rotational speed of the SR motor 1, switching of the control mode is not performed.

The rotational speed on the first switching line L₁ is a predetermined rotational speed (a first rotational speed) for switching from the second control mode to the first control mode. The rotational speed on the second switching line L₂ is a predetermined rotational speed (a second rotational speed) for switching from the first control mode to the second control mode. In the example illustrated in FIG. 10, the second rotational speed is higher than the first rotational speed in a state where the torque of the SR motor 1 has a predetermined value. Because the first rotational speed and the second rotational speed are different values in a state where the torque of the SR motor 1 has a predetermined value, there is a hysteresis width between the first rotational speed and the second rotational speed as reference values at the time of switching control. This means that the predetermined rotational speed at which the control mode is switched has the hysteresis width. In this case, when the rotational speed of the SR motor 1 at a predetermined torque decreases from the side of higher rotational speed than the second rotational speed to a value lower than the first rotational speed, the control device 100 switches the control mode from the second control mode to the first control mode. On the other hand, when the rotational speed of the SR motor 1 at a predetermined torque increases from the side of lower rotational speed than the first rotational speed to a value equal to or higher than the second rotational speed, the control device 100 switches the control mode from the first control mode to the second control mode.

As described above, according to the first modification, due to the hysteresis width provided for the switching zone, a feeling of being busy caused by frequent switching between the first and second control modes can be suppressed. Furthermore, changes in the efficiency, the vibration and noise, and the torque fluctuations due to frequent execution of the switching control can be suppressed.

### 7. Second modification

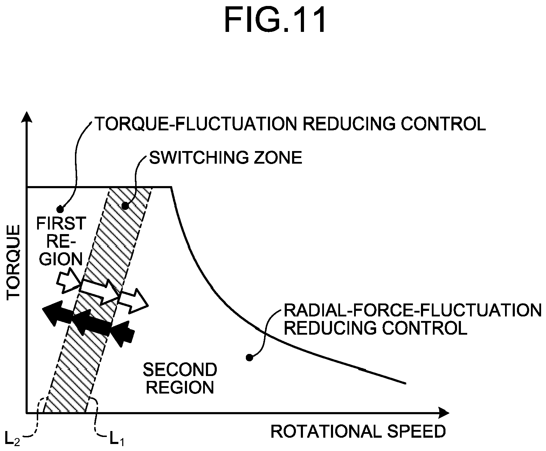

In a second modification, the switching map and the switching operation of the control mode are different from those in the first modification. FIG. 11 is an explanatory diagram of a switching map and a switching operation in the second modification.

The control device 100 switches the motor drive control between the first control mode and the second control mode using the switching map illustrated in FIG. 11. In the switching map of the second modification, as illustrated in FIG. 11, the first switching line L₁ is set to the side of higher rotational speed than the second switching line L₂. The control device 100 executes control (gradual change mode) of gradually switching the control mode in a switching zone.

When the mode is switched from the second control mode to the first control mode, the operating point moves from a second region side into the switching zone across the first switching line L₁ as indicated by black arrows in FIG. 11. The control device 100 starts switching control to the first control mode when the operating point moves across the first switching line L₁. That is, when the operating point is moving in the switching zone toward the second switching line L₂ due to a factor such as a reduction in the rotational speed of the SR motor 1, the control device 100 executes control (gradual change mode) to gradually switch the mode from the second control mode to the first control mode. When the operating point moves across the second switching line L₂ from the switching zone, the switching from the second control mode to the first control mode is completed.

When the mode is switched from the first control mode to the second control mode, the operating point moves from a first region side into the switching zone across the second switching line L₂ as indicated by white arrows in FIG. 11. The control device 100 starts switching control to the second control mode when the operating point moves across the second switching line L₂. That is, when the operating point is moving in the switching zone toward the first switching line L₁ due to a factor such as an increase in the rotational speed of the SR motor 1, the control device 100 executes control (gradual change mode) to gradually switch the mode from the first control mode to the second control mode. When the operating point moves across the first switching line L₁ from the switching zone, the switching from the first control mode to the second control mode is completed.

In the example illustrated in FIG. 11, at a predetermined torque, the second rotational speed on the second switching line L₂ is smaller than the first rotational speed on the first switching line L₁. In this case, during a period from when the rotational speed of the SR motor 1 at a predetermined torque falls below the first rotational speed till when the rotational speed reaches the second rotational speed, the control device 100 gradually switches the mode from the second control mode to the first control mode. On the other hand, during a period from when the rotational speed of the SR motor 1 at a predetermined torque exceeds the second rotational speed till when the rotational speed reaches the first rotational speed, the control device 100 gradually switches the mode from the first control mode to the second control mode.

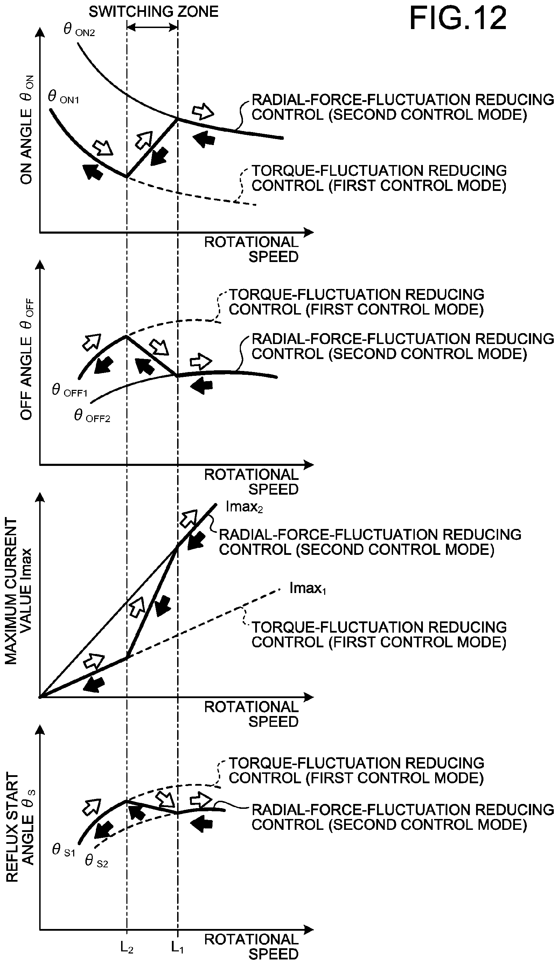

FIG. 12 is an explanatory diagram of a switching operation in the switching zone. In FIG. 12, an ON angle θ_{ON} for the application voltage, an OFF angle θ_{OFF} for the application voltage, a maximum current value Imax of the excitation current, and a reflux start angle θ_{S} are illustrated. FIG. 12 illustrates an excitation condition (first excitation condition) at a time when the torque-fluctuation reducing control as the first control is executed and an excitation condition (second excitation condition) at a time when the radial-force-fluctuation reducing control as the second control is executed.

Regarding the ON angle θ_{ON}, an ON angle θ_{ON1} in the first control mode is set to be smaller than an ON angle θ_{ON2} in the second control mode. The switching operation from the first control mode to the second control mode is described using the ON angle θ_{ON} as an example. In the switching zone, the ON angle θ_{ON} changes to gradually increase in the size between the ON angle θ_{ON1} of the first control mode and the ON angle θ_{ON2} of the second control mode. The ON angle θ_{ON} is thus changed to gradually increase. In the switching operation from the second control mode to the first control mode, the ON angle θ_{ON} changes to gradually decrease from the ON angle θ_{ON2} of the second control mode to the ON angle θ_{ON1} of the first control mode.

Regarding the OFF angle θ_{OFF}, the OFF angle θ_{OFF1} of the first control mode is set to be larger than the OFF angle θ_{OFF2} of the second control mode. To describe the switching operation from the second control mode to the first control mode using the OFF angle θ_{OFF} as an example, the OFF angle θ_{OFF} changes to gradually increase in the size between the OFF angle θ_{OFF2} of the second control mode and the OFF angle θ_{OFF1} of the first control mode in the switching zone. The OFF angle θ_{OFF} is thus changed to gradually increase. On the other hand, in the switching operation from the first control mode to the second control mode, the OFF angle θ_{OFF} changes to gradually decrease from the OFF angle θ_{OFF1} of the first control mode to the OFF angle θ_{OFF2} of the second control mode.

Regarding the maximum current value Imax, a maximum current value Imax₁ of the first control mode is set to be smaller than a maximum current value Imax₂ of the second control mode. To described the switching operation from the first control mode to the second control mode using the maximum current value Imax as an example, the maximum current value Imax changes to gradually increase in the size between the maximum current value Imax₁ of the first control mode and the maximum current value Imax₂ of the second control mode in the switching zone. On the other hand, in the switching operation from the second control mode to the first control mode, the maximum current value Imax changes to gradually decrease from the maximum current value Imax₂ of the second control mode to the maximum current value Imax₁ of the first control mode.

Regarding the reflux start angle θ_{S}, a reflux start angle θ_{S1} of the first control mode is set to be larger than a reflux start angle θ_{S2} of the second control mode. To describe the switching operation from the second control mode to the first control mode using the reflux start angle θ_{S} as an example, the reflux start angle θ_{S} changes to gradually increase in the size between the reflux start angle θ_{S2} of the second control mode and the reflux start angle θ_{S1} of the first control mode in the switching zone. The reflux start angle θ_{S} is thus changed to gradually increase. On the other hand, in the switching operation from the first control mode to the second control mode, the reflux start angle θ_{S} changes to gradually decrease from the reflux start angle θ_{S1} of the first control mode to the reflux start angle θ_{S2} of the second control mode.

### 7-1. Current waveform of gradual change mode

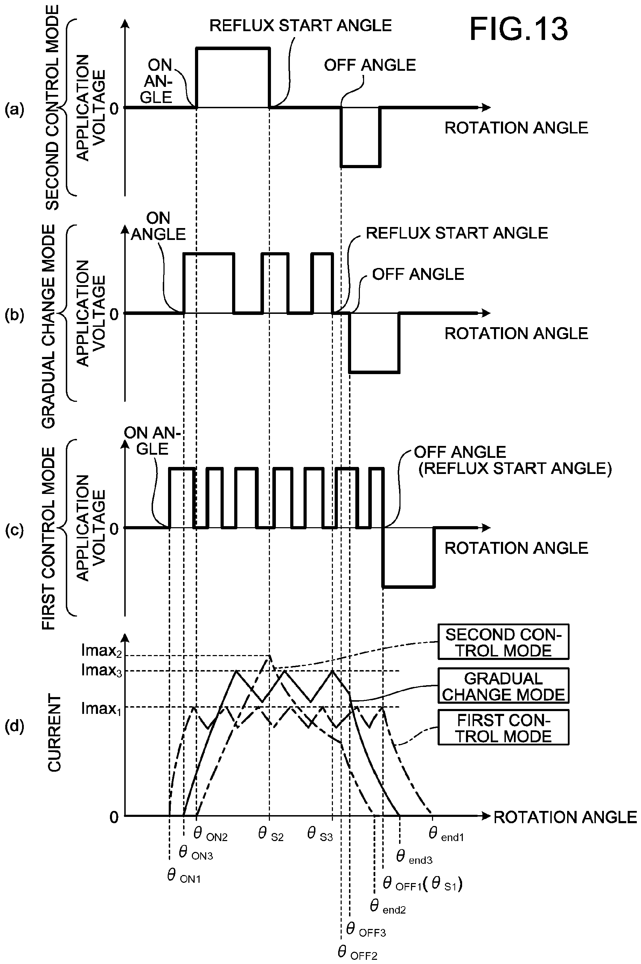

A current waveform of the gradual change mode is described with reference to (a) to (d) of FIG. 13. (a) of FIG. 13 is a diagram illustrating a voltage waveform in the second control mode. (b) of FIG. 13 is a diagram illustrating a voltage waveform in the gradual change mode. (c) of FIG. 13 is a diagram illustrating a voltage waveform in the first control mode. (d) of FIG. 13 is a diagram illustrating current waveforms in the respective modes. In (d) of FIG. 13, the current waveform in the first control mode is indicated by a dashed dotted line, the current waveform in the second control mode is indicated by a dashed double-dotted line, and the current waveform in the gradual change mode is indicated by a solid line.

As illustrated in (d) of FIG. 13, the current waveform in the gradual change mode has a shape between the current waveform in the first control mode and the current waveform in the second control mode. An excitation zone in the gradual change mode is narrower than that in the first control mode and wider than that in the second control mode. A maximum current value Imax₃ in the gradual change mode is larger than a maximum current value Imax₁ in the first control mode and smaller than a maximum current value Imax₂ in the second control mode. The excitation zone and the maximum current value of the current waveform in the first control mode are wider and smaller than those of the current waveform in the second control mode, respectively. For example, when the control mode is switched from the first control mode to the second control mode, the current waveform changes from that in the first control mode to that in the second control mode passing through that in the gradual change mode. On the other hand, when the control mode is switched from the second control mode to the first control mode, the current waveform changes from that in the second control mode to that in the first control mode passing through that in the gradual change mode. Such passage through the gradual change mode at the time of switching of the control mode enables the current waveform to be gradually changed.

Specifically, an ON angle θ_{ON3} (excitation start angle) in the gradual change mode is larger than the ON angle θ_{ON1} (excitation start angle) in the first control mode and smaller than the ON angle θ_{ON2} (excitation start angle) in the second control mode. An excitation end angle θ_{end3} in the gradual change mode is larger than an excitation end angle θ_{end2} in the second control mode and smaller than an excitation end angle θ_{end1} in the first control mode. A reflux start angle θ_{S3} in the gradual change mode is larger than the reflux start angle θ_{S2} in the second control mode and smaller than the reflux start angle θ_{S1} in the first control mode. An OFF angle θ_{OFF3} in the gradual change mode is smaller than the OFF angle θ_{OFF1} in the first control mode and larger than the OFF angle θ_{OFF2} in the second control mode. Because the control mode shifts from the positive voltage mode to the negative voltage mode without passing through the free-wheeling mode in the first control mode, the OFF angle θ_{OFF1} and the reflux start angle θ_{S1} are equal. An interval (rotation angle difference) between the reflux start angle θ_{S3} and the OFF angle θ_{OFF3} in the gradual change mode is smaller than an interval between the reflux start angle θ_{S2} and the OFF angle θ_{OFF2} in the second control mode. Accordingly, a rotation angle range in which the free-wheeling mode is performed in the gradual change mode is set to be narrower than that in the second control mode and wider than that in the first control mode. A hysteresis zone in the gradual change mode is set to be narrower than that in the first control mode and the number of times of execution of the positive voltage mode in the hysteresis zone is set to be smaller than that in the first control mode. That is, due to passing through the gradual change mode, the hysteresis zone changes and the number of peaks (the number of valleys) in the current waveform in the hysteresis zone also changes.

When the control mode is switched from the first control mode to the second control mode through the gradual change mode, the excitation zone is gradually narrowed and the maximum current value is gradually increased. In this case, the excitation zone is gradually narrowed by putting backward the ON angle θ_{ON3} (excitation start angle) and putting forward the reflux start angle θ_{S3.} Specifically, the ON angle θ_{ON3} in the gradual change mode is put backward relative to the ON angle θ_{ON1} (excitation start angle) in the first control mode toward the ON angle θ_{ON2} (excitation start angle) in the second control mode, and the reflux start angle θ_{S3} in the gradual change mode is put forward relative to the reflux start angle θ_{S1} in the first control mode toward the reflux start angle θ_{S2} in the second control mode. Due to the reflux start angle θ_{S} put forward in this way, the excitation end angle θ_{end3} in the gradual change mode is decreased relative to the excitation end angle θ_{end1} in the first control mode toward the excitation end angle θ_{end2} in the second control mode. Furthermore, because the reflux start angle θ_{S1} and the OFF angle θ_{OFF1} are equal in the first control mode, shifting from the first control mode to the second control mode through the gradual change mode gradually increases the interval between the reflux start angle θ_{S} and the OFF angle θ_{OFF.} Furthermore, the maximum current value is gradually increased from the maximum current value Imax₁ in the first control mode to the maximum current value Imax₂ in the second control mode through the maximum current value Imax₃ in the gradual change mode.

When the control mode is switched from the second control mode to the first control mode through the gradual change mode, the excitation zone is gradually widened and the maximum current value is gradually decreased. In this case, the excitation zone is gradually widened by putting forward the ON angle θ_{ON3} (excitation start angle) and putting backward the reflux start angle θ_{S3}. That is, the ON angle θ_{ON3} in the gradual change mode is put forward relative to the ON angle θ_{ON2} (excitation start angle) in the second control mode toward the ON angle θ_{ON1} (excitation start angle) in the first control mode and the reflux start angle θ_{S3} in the gradual change mode is put backward relative to the reflux start angle θ_{S2} in the second control mode toward the reflux start angle θ_{S1} in the first control mode. Due to putting backward of the reflux start angle θ_{S} in this way, the excitation end angle θ_{end3} in the gradual change mode is increased relative to the excitation end angle θ_{end2} in the second control mode toward the excitation end angle θ_{end1} in the first control mode. Furthermore, because the interval between the reflux start angle θ_{S2} and the OFF angle θ_{OFF2} in the second control mode is larger than that in the gradual change mode, the interval between the reflux start angle θ_{S} and the OFF angle θ_{OFF} is gradually narrowed due to shifting from the second control mode to the first control mode through the gradual change mode. The maximum current value is gradually decreased from the maximum current value Imax₂ in the second control mode to the maximum current value Imax₁ in the first control mode through the maximum current value Imax₃ in the gradual change mode.

As described above, according to the second modification, the excitation condition (the current waveform) can be change gradually at the time of switching of the control mode. This can suppress abrupt changes in the vibration and noise and the torque fluctuations caused by a difference in the excitation condition (the current waveform) at the time of switching of the control mode.

### 8. Third modification

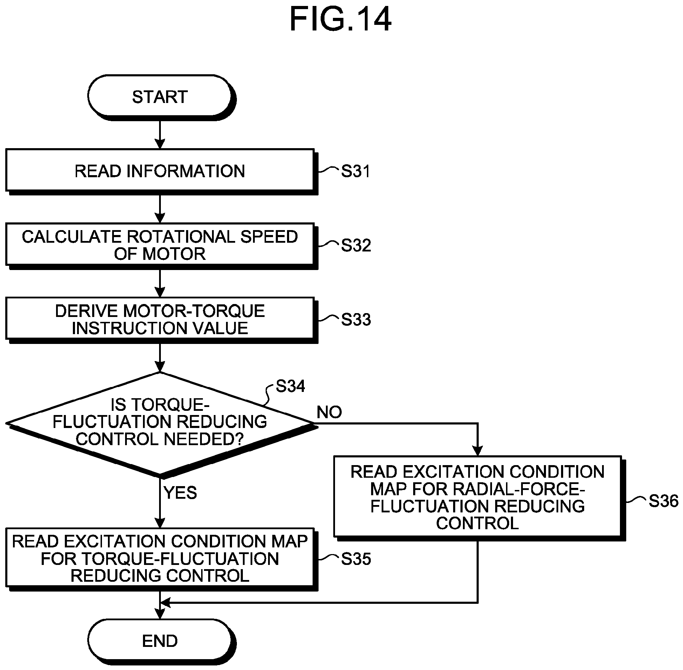

In a third modification, the control device 100 is configured to switch between an excitation condition map for the first control mode and an excitation condition map for the second control mode. FIG. 14 is a flowchart illustrating switching control executed by the control device 100 according to the third modification, which is a modification of the switching control. Steps S31 to S34 illustrated in FIG. 14 are identical to Steps S1 to S4 in FIG. 3 described above.

As illustrated in FIG. 14, when the torque-fluctuation reducing control is needed and thus a positive determination is performed at Step S34, the control device 100 reads an excitation condition map for the torque-fluctuation reducing control (Step S35). At Step S35, a map of the first excitation condition described above is read. The control device 100 then ends this control routine.

When the torque-fluctuation reducing control is not needed and thus a negative determination is performed at Step S34, the control device 100 reads an excitation condition map for the radial-force-fluctuation reducing control (Step S36). At Step S36, a map of the second excitation condition described above is read. The control device 100 then ends this control routine.

### 9. Applicable vehicle

The SR motor 1 can be mounted as a running power source on a vehicle. When the SR motor 1 is mounted on a vehicle, information such as an accelerator position signal input from an accelerator position sensor and a vehicle speed signal input from a vehicle speed sensor is read at Step S1 in FIG. 3 described above. At Step S3 in FIG. 3, a required torque is calculated using the accelerator position signal, the vehicle speed signal, and a predetermined required torque map and a motor-torque instruction value is derived according to the required torque.

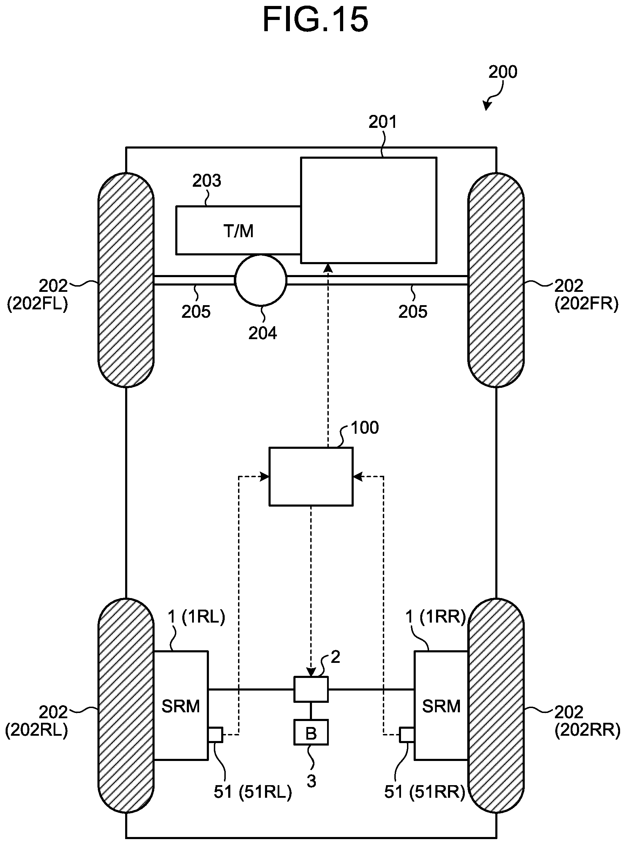

FIG. 15 is a skeleton diagram illustrating an example of an applicable vehicle. A vehicle 200 illustrated in FIG. 15 includes an engine 201, wheels 202, a transmission (T/M) 203, a differential gear 204, drive shafts 205, and the SR motors 1 serving as running power sources. The vehicle 200 is a four-wheel drive vehicle in which the engine 201 drives left and right front wheels 202FL and 202FR and the SR motors 1 serving as rear motors drive left and right rear wheels 202RL and 202RR, respectively.

The engine 201 is a known internal-combustion engine. In a front-side drive device of the vehicle 200, the engine 201 is connected to the left and right drive shafts 205 and 205 via the transmission 203 and the differential gear 204. The transmission 203 is, for example, a stage or non-stage automatic transmission or a manual transmission. One of the left and right drive shafts 205 and 205 is connected to the left front wheel 202FL and the other drive shaft 205 is connected to the right front wheel 202FR. The front wheels 202FL and 202FR are driven with an output torque (engine torque) of the engine 201. The vehicle 200 can include a motor generator (MG) that drives the front wheels 202FL and 202FR in addition to the engine 201.

The SR motors 1 are so-called in-wheel motors and one SR motor 1 is provided for each of the left and right rear wheels 202RL and 202RR. In a rear-side drive device of the vehicle 200, a left-rear SR motor 1RL is connected to the left rear wheel 202RL and a right-rear SR motor 1RR is connected to the right rear wheel 202RR. The rear wheels 202RL and 202RR are capable of rotating independently. The left rear wheel 202RL is driven with an output torque (motor torque) of the left-rear SR motor 1RL. The right rear wheel 202RR is driven with an output torque (motor torque) of the right-rear SR motor 1RR. The SR motors 1RL and 1RR are connected to the battery (B) 3 via the inverter 2. Due to power supplied from the battery 3, the SR motors 1 function as electric motors and also function as electric generators that convert the torques (external forces) transmitted from the rear wheels 202RL and 202RR into power. The inverter 2 includes an electrical circuit for the left-rear SR motor 1RL and an electrical circuit for the right-rear SR motor 1RR.

The control device 100 controls the SR motors 1RL and 1RR and the engine 201. For example, the control device 100 includes a control unit (SR motor ECU) for the SR motors and a control unit (engine ECU) for the engine. In this case, the engine ECU executes engine torque control to adjust the output torque of the engine 201 to an intended torque value under intake air control, fuel injection control, ignition control, and the like. The SR motor ECU executes motor control on the SR motors 1RL and 1RR based on a signal input from the rotor position sensor 51. The rotor position sensor 51 includes a left-rear rotor position sensor 51RL that detects the rotational speed of the left-rear SR motor 1RL and a right-rear rotor position sensor 51RR that detects the rotational speed of the right-rear SR motor 1RR.

A vehicle example using the SR motor 1 as a running drive source is not limited to the example illustrated in FIG. 15. For example, a vehicle in which the front-side drive device and the rear-side drive device illustrated in FIG. 15 are interchanged, so that the SR motors 1 as front motors drive the left and right front wheels 202FL and 202FR, respectively, and the engine 201 drives the left and right rear wheels 202RL and 202RR may be applied. As a modification of the rear-side drive device illustrated in FIG. 15, a vehicle in which one SR motor 1 is connected to the left and right rear wheels 202RL and 202RR via a differential gear and left and right drive shafts can be applied. Still another example of the applicable vehicle is a vehicle (an electric car) that has no engine mounted thereon. In the case of an electric car, a four-wheel drive vehicle in which the SR motors 1 as in-wheel motors are provided for all of front, rear, right, and left wheels 202, respectively, can be applied. Another example of the electric car can be a front-wheel drive electric car in which two SR motors 1 as front-side in-wheel motors drive the left and right front wheels 202FL and 202RR, respectively, or a rear-wheel drive electric car in which the SR motors 1 as rear motors drive the left and right rear wheels 202RL and 202RR, respectively. In the case of a rear-wheel drive electric car, a vehicle in which the left and right rear wheels 202RL and 202RR are driven by one SR motor 1 or a vehicle in which the SR motors 1 as in-wheel motors are provided for the left and right rear wheels 202RL and 202RR, respectively, can be applied.

In the present invention, a drive control is switched between a first control mode for reducing torque fluctuations and a second control mode for reducing radial force fluctuations according to the rotational speed of a switched reluctance motor. Because the torque fluctuations need to be reduced in a region where the rotational speed of the motor is small, control to reduce the torque fluctuations is executed in a case where the rotational speed of the motor is smaller than a predetermined rotational speed. When the rotational speed of the motor is equal to or larger than the predetermined rotational speed, control to reduce fluctuations of a radial force can be executed. Accordingly, noise and vibration and the torque fluctuations can be reduced while a reduction in efficiency is suppressed.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A control device (100) for a switched reluctance motor (1) that is driven by a flow of an excitation current through coils (12), the control device (100) comprising:
a switching controller (100) configured to execute switching control to switch drive control of the switched reluctance motor (1) between a first control mode for reducing torque fluctuations and a second control mode for reducing fluctuations of a radial force as a radial component of a magnetic attractive force based on rotational speed and a torque of the switched reluctance motor (1);
a first controller (100) configured to execute first control to cause an excitation current with a current waveform for reducing the torque fluctuations to flow through the coils (12) as control in the first control mode; and
a second controller (100) configured to execute second control to cause an excitation current with a current waveform for reducing the radial force fluctuations to flow through the coils (12) as control in the second control mode, wherein
the switching controller (100) is configured to:
select the first control mode when the rotational speed of the switched reluctance motor (1) is smaller than a predetermined rotational speed in a state where the torque has a predetermined value; and
select the second control mode when the rotational speed of the switched reluctance motor (1) is equal to or larger than the predetermined rotational speed in a state where the torque has the predetermined value, and
the first control mode includes control to set an excitation zone in which the excitation current is caused to flow through the coils (12) to a rotation angle range wider than that of the excitation zone of the second control mode.

2. The control device (100) according to claim 1, wherein the predetermined rotational speed increases as the torque increases.

3. The control device (100) according to claim 1 or 2, wherein
the predetermined rotational speed includes:
a first rotational speed for switching from the second control mode to the first control mode; and
a second rotational speed for switching from the first control mode to the second control mode, the second rotational speed being larger than the first rotational speed in a state where the torque has the predetermined value, and
the switching controller (100) is configured to:
execute switching control from the second control mode to the first control mode when the rotational speed of the switched reluctance motor (1) decreases from a larger rotational speed than the second rotational speed to be smaller than the first rotational speed in a state where the torque has the predetermined value; and
execute switching control from the first control mode to the second control mode when the rotational speed of the switched reluctance motor (1) increases from a smaller rotational speed than the first rotational speed to be equal to or larger than the second rotational speed in a state where the torque has the predetermined value.

4. The control device (100) according to claim 1 or 2, wherein
the predetermined rotational speed includes:
a first rotational speed for switching from the second control mode to the first control mode, and
a second rotational speed for switching from the first control mode to the second control mode; the second rotational speed being smaller than the first rotational speed in a state where the torque has the predetermined value, and
the switching controller (100) is configured to:
execute control to gradually switch from the second control mode to the first control mode during a period from when the rotational speed of the switched reluctance motor (1) falls below the first rotational speed till when the rotational speed of the switched reluctance motor (1) reaches the second rotational speed in a state where the torque has the predetermined value, and
execute control to gradually switch from the first control mode to the second control mode during a period from when the rotational speed of the switched reluctance motor (1) exceeds the second rotational speed till which the rotational speed of the switched reluctance motor (1) reaches the first rotational speed in a state where the torque has the predetermined value.

5. The control device (100) according to any one of claims 1 to 4, wherein the current waveform for reducing the torque fluctuations has the excitation zone wider than that of the current waveform for reducing the radial force fluctuations and a maximum current value smaller than that of the current waveform for reducing the radial force fluctuations.
